# EUROPEAN PATENT SPECIFICATION

(11) **EP 2 329 680 B1**
(45) Date of publication and mention of the grant of the patent: **27.08.2014**
(21) Application number: 09785853.4
(22) Date of filing: 23.03.2009
(51) Int. Cl.: H04W 88/06

(54) **WIRELESS PICONETS, DEVICES AND METHODS THAT SELF-LEARN MULTIFRAME SLOT PATTERNS**
DRAHTLOSE PICONETS, EINRICHTUNGEN UND VERFAHREN, DIE MEHRRAHMEN-SCHLITZMUSTER SELBST LERNEN
PICORÉSEAUX SANS FIL, DISPOSITIFS ET PROCÉDÉS QUI APPRENNENT AUTOMATIQUEMENT DES MOTIFS D'INTERVALLE DE TEMPS DE MULTITRAME

(30) Priority: 22.09.2008 US 235256
(43) Date of publication of application: 08.06.2011
(73) Proprietor: Sony Ericsson Mobile Communications AB, 221 88 Lund (SE)
(72) Inventor: HAARTSEN, Jacobus, Cornelis, NL-7772 BG Hardenberg (NL)
(74) Representative: Valea AB
(86) International application number: PCT/IB2009/005059
(87) International publication number: WO 2010/032094

(56) References cited:
- WO-A-99/29126
- WO-A-2007/008981
- WO-A-2008/070777
- US-A1- 2007 232 358
- US-A1- 2008 205 365

## Description

### BACKGROUND OF THE INVENTION

This invention relates to wireless networks and, more particularly, to short-range wireless piconets, devices and operating methods therefor.

Wireless piconets are widely used to allow short-range, ad-hoc wireless communications between adjacent devices. For example, Bluetooth is a well known short-range wireless piconet standard that can allow up to eight devices to be connected together in a short-range ad-hoc piconet. In particular, Bluetooth-enabled headsets are widely used to allow the headset to wirelessly communicate with a mobile telephone, an audio player, a computer, a Personal Digital Assistant (PDA), a vehicle navigation system or the like.

In a short-range wireless piconet, one device generally operates as a master device, and one or more devices operate as slave devices. For example, the Bluetooth headset may be a slave device, whereas the mobile telephone, audio player, computer, PDA, vehicle navigation system, etc., may be the master. Often, the master (or the slave) may include a wide area wireless network transceiver therein, as well. As used herein, "wide area" means larger transmitting/receiving area than a short-range, ad-hoc piconet. For example, the mobile telephone, audio player, computer, PDA, etc., may include a Wireless Local Area Network (WLAN), a Worldwide Interoperability for Microwave Access (WiMAX), a Long Term Evolution (LTE), a High Speed Packet Access (HSPA) and/or other wide area wireless network transceiver. Since the Bluetooth transceiver of the master (or the slave) and the wide area network transceiver are located in very close proximity in the master (or slave), i.e., collocated, they may interfere with each other even if they do not use the exact same frequency bands. More specifically, the isolation between the antennas is generally too low to guarantee undisturbed reception in one transceiver while the other transceiver is transmitting.

It is known to solve the collocation problem by applying time multiplexing, so that only one transceiver (wide area or piconet) can operate at any given time, as described in *"*Bluetooth/WiMAX Coexistence - Solution and Recommendations Based on Extended Synchronous Connection-Oriented Logical Link", Bluetooth Special Interest Group, Draft, Revision D05r02, Nov. 19, 2007, hereinafter referred to as "Bluetooth D05r02".

WO 99/29126 A1 discloses a terminal for simultaneously operating in a first mobile radio communications network and a second different radio communications network. The terminal comprises: first radio transceiver means for transmitting and receiving in said mobile communications network and second radio transceiver means for transmitting and receiving packets in the second radio communications network. The first transceiver means is arranged such that successive transmissions by said first transceiver means in said mobile communications network are separated by a first period of time or a multiple thereof. The second transceiver means is arranged for transmitting and/or receiving an integer number of packets sequentially in the first period of time or a multiple thereof.

### SUMMARY OF THE INVENTION

Some embodiments allow a first device in a short-range wireless piconet to self-learn a multi-frame piconet pattern that is used by a second device as a result of a deferral that reduces or avoids simultaneous transmission and reception by two transceivers at the second device. The first device can use this self-learned multi-frame piconet pattern to selectively control transmitting and receiving by the first device. Power can thereby be conserved at the first device.

More specifically, some embodiments provide methods of operating a first device that communicates with a second device in a short-range wireless piconet. These methods include determining at the first device a multi-frame piconet pattern comprising at least two different piconet slot positions that are used by the second device to transmit to the first device in at least two different piconet frames and/or at least two different piconet slot positions that are used by the second device to receive from the first device in at least two different piconet frames. Transmitting and/or receiving by the first device is selectively controlled in response to the multi-frame piconet pattern that was determined by the first device so that the first device selectively transmits to the second device during the at least two different piconet slot positions in the at least two different piconet frames that were determined to be used by the second device to receive from the first device and/or the first device selectively receives from the second device during the at least two different piconet slot positions in the at least two different piconet frames that were determined to be used by the second device to transmit to the first device.

These methods further includes determining at the second device that a first frame of the multi-frame piconet pattern is not usable to transmit to the first device and/or to receive from the first device while selectively refraining from transmitting to the first device concurrent with receiving over a wide area wireless network and/or selectively refraining from receiving from the first device concurrent with transmitting over the wide area wireless network. Increasing data capacity of at least one other frame of the multi-frame piconet pattern at least partially compensate for the first frame that is not usable to transmit to the first device and/or to receive from the first device.

In some embodiments, the first device includes a first device transmitter and a first device receiver. Selectively controlling transmitting and/or receiving is performed by placing the first device transmitter in a sleep mode, except during the at least two different piconet slot positions in the at least two different piconet frames that were determined to be used by the second device to receive from the first device, and/or placing the first device receiver in a sleep mode, except during the at least two different piconet slot positions in the at least two different piconet frames that were determined to be used by the second device to transmit to the first device.

In other embodiments, the determining of the multi-frame piconet pattern at the first device is preceded by the second device selectively refraining from transmitting to the first device concurrent with receiving over a wide area wireless network, and/or the second device selectively refraining from receiving from the first device concurrent with transmitting over the wide area wireless network. Thus, the multi-frame piconet pattern may be produced as a result of the selective refraining from transmitting and/or from receiving by the second device that includes a collocated wide area wireless network transceiver. In some embodiments, the multi-frame piconet pattern is of a duration that is an integer multiple of a frame duration of the wide area wireless network. Moreover, in other embodiments, the short-range wireless piconet is a Bluetooth wireless piconet, and the wide area wireless network is a WLAN, WiMAX, LTE and/or HSPA wide area wireless network.

In still other embodiments, it may be determined at the second device that a first frame of the multi-frame piconet pattern is not usable to transmit to the first device and/or to receive from the first device while selectively refraining from transmitting to the first device concurrent with receiving over a wide area wireless network and/or selectively refraining from receiving from the first device concurrent with transmitting over the wide area wireless network. In some embodiments, if a first frame of the multi-frame piconet pattern is determined not to be usable, transmitting to the first device and/or receiving from the first device is performed at a higher bit density in a second frame of the multi-frame piconet pattern than in a third frame of the multi-frame piconet pattern. In other embodiments, transmitting to the first device and/or receiving from the first device is performed in adjacent slot positions that straddle adjacent frames in the multi-frame piconet pattern, in response to the determining. In still other embodiments, a bit density of transmitting and/or receiving in the multi-frame piconet pattern may be increased, in response to the determining. Accordingly, these embodiments may be used to at least partially compensate for the fact that a given frame of the multi-frame piconet pattern may not be usable due to wide area network coexistence.

Still other embodiments provide a first device that communicates with a second device in a short-range wireless piconet. The first device includes a multi-frame piconet pattern recognizer and a first device transceiver. The multi-frame piconet pattern recognizer is configured to determine a multi-frame piconet pattern comprising at least two different piconet slot positions that are used by the second device to transmit to the first device in at least two different piconet frames and/or at least two different piconet slot positions that are used by the second device to receive from the first device in at least two different piconet frames. The first device transceiver is configured to selectively transmit to the second device during the at least two piconet slot positions in the at least two different piconet frames that were determined by the pattern recognizer to be used by the second device to receive from the first device and/or to selectively receive from the first device during the at least two different piconet slot positions in the at least two different piconet frames that were determined by the pattern recognizer to be used by the second device to transmit to the first device. ,

In some embodiments, the first device includes a first device transmitter and a first device receiver. Selectively controlling transmitting and/or receiving is performed by placing the first device transmitter in a sleep mode, except during the at least two different piconet slot positions in the at least two different piconet frames that were determined to be used by the second device to receive from the first device, and/or placing the first device receiver in a sleep mode, except during the at least two different piconet slot positions in the at least two different piconet frames that were determined to be used by the second device to transmit to the first device.

In other embodiments, the determining of the multi-frame piconet pattern at the first device is preceded by the second device selectively refraining from transmitting to the first device concurrent with receiving over a wide area wireless network, and/or the second device selectively refraining from receiving from the first device concurrent with transmitting over the wide area wireless network. Thus, the multi-frame piconet pattern may be produced as a result of the selective refraining from transmitting and/or from receiving by the second device that includes a collocated wide area wireless network transceiver. In some embodiments, the multi-frame piconet pattern is of a duration that is an integer multiple of a frame duration of the wide area wireless network. Moreover, in other embodiments, the short-range wireless piconet is a Bluetooth wireless piconet, and the wide area wireless network is a WLAN, WiMAX, LTE and/or HSPA wide area wireless network.

In still other embodiments, it may be determined at the second device that a first frame of the multi-frame piconet pattern is not usable to transmit to the first device and/or to receive from the first device while selectively refraining from transmitting to the first device concurrent with receiving over a wide area wireless network and/or selectively refraining from receiving from the first device concurrent with transmitting over the wide area wireless network. In some embodiments, if a first frame of the multi-frame piconet pattern is determined not to be usable, transmitting to the first device and/or receiving from the first device is performed at a higher bit density in a second frame of the multi-frame piconet pattern than in a third frame of the multi-frame piconet pattern. In other embodiments, transmitting to the first device and/or receiving from the first device is performed in adjacent slot positions that straddle adjacent frames in the multi-frame piconet pattern, in response to the determining. In still other embodiments, a bit density of transmitting and/or receiving in the multi-frame piconet pattern may be increased, in response The multi-frame piconet pattern recognizer at the second device is configured to determine that a first frame of the multi-frame piconet pattern is not usable to transmit to the first device and/or to receive from the first device while selectively refraining from transmitting to the first device concurrent with receiving over the wide area wireless network and/or selectively refraining from receiving from the first device concurrent with transmitting over the wide area wireless network. The second device is further configured to at least partially compensate for the first frame that is not usable to transmit to the first device and/or to receive from the first device by increasing data capacity of at least one other frame of the multi-frame piconet pattern. to the determining. Accordingly, these embodiments may be used to at least partially compensate for the fact that a given frame of the multi-frame piconet pattern may not be usable due to wide area network coexistence.

Still other embodiments provide a short-range wireless piconet comprising a second device and a first device. The second device comprises a wide area wireless transceiver and a second device transceiver that are collocated. The second device is configured to selectively refrain from transmitting to the first device over the second device transceiver concurrent with receiving from a wide area wireless network over the wide area wireless network transceiver and/or to selectively refrain from receiving from the first device over the second device transceiver concurrent with transmitting to the wide area wireless network over the wide area wireless network transceiver. The first device includes a first device transceiver. The first device is configured to determine a multi-frame piconet pattern comprising at least two different piconet slot positions that are used by the second device transceiver to transmit to the first device in at least two different piconet frames and/or at least two different piconet slots that are used by the second device transceiver to receive from the first device in at least two different piconet frames and to selectively control transmitting and/or receiving by the first device transceiver in response to the multi-frame piconet pattern that was determined by the first device so that the first device transceiver selectively transmits to the second device during the at least two different piconet slot positions in the at least two different piconet frames that were determined to be used by the second device to receive from the first device and/or the first device transceiver selectively receives from the second device during the at least two different piconet slot positions in the at least two different piconet frames that were determined to be used by the second device to transmit to the first device.

In some embodiments, the first device includes a first device transmitter and a first device receiver. Selectively controlling transmitting and/or receiving is performed by placing the first device transmitter in a sleep mode, except during the at least two different piconet slot positions in the at least two different piconet frames that were determined to be used by the second device to receive from the first device, and/or placing the first device receiver in a sleep mode, except during the at least two different piconet slot positions in the at least two different piconet frames that were determined to be used by the second device to transmit to the first device.

In other embodiments, the determining of the multi-frame piconet pattern at the first device is preceded by the second device selectively refraining from transmitting to the first device concurrent with receiving over a wide area wireless network, and/or the second device selectively refraining from receiving from the first device concurrent with transmitting over the wide area wireless network. Thus, the multi-frame piconet pattern may be produced as a result of the selective refraining from transmitting and/or from receiving by the second device that includes a collocated wide area wireless network transceiver. In some embodiments, the multi-frame piconet pattern is of a duration that is an integer multiple of a frame duration of the wide area wireless network. Moreover, in other embodiments, the short-range wireless piconet is a Bluetooth wireless piconet, and the wide area wireless network is a WLAN, WiMAX, LTE and/or HSPA wide area wireless network.

In still other embodiments, it may be determined at the second device that a first frame of the multi-frame piconet pattern is not usable to transmit to the first device and/or to receive from the first device while selectively refraining from transmitting to the first device concurrent with receiving over a wide area wireless network and/or selectively refraining from receiving from the first device concurrent with transmitting over the wide area wireless network. In some embodiments, if a first frame of the multi-frame piconet pattern is determined not to be usable, transmitting to the first device and/or receiving from the first device is performed at a higher bit density in a second frame of the multi-frame piconet pattern than in a third frame of the multi-frame piconet pattern. In other embodiments, transmitting to the first device and/or receiving from the first device is performed in adjacent slot positions that straddle adjacent frames in the multi-frame piconet pattern, in response to the determining. In still other embodiments, a bit density of transmitting and/or receiving in the multi-frame piconet pattern may be increased, in response to the determining. Accordingly, these embodiments may be used to at least partially compensate for the fact that a given frame of the multi-frame piconet pattern may not be usable due to wide area network coexistence.

Still other embodiments provide methods of operating a second device that communicates with a first device in a short-range wireless piconet. These methods include selectively refraining from transmitting to the first device concurrent with receiving over a wide area wireless network, and/or selectively refraining from receiving from the first device concurrent with transmitting over the wide area wireless network. A multi-frame piconet pattern is thereby produced that comprises at least two different piconet slot positions that are used by the second device to transmit to the first device in at least two different piconet frames and/or at least two different piconet slot positions that are used by the second device to receive from the first device in at least two different piconet frames.

These methods further includes determining at the second device that a first frame of the multi-frame piconet pattern is not usable to transmit to the first device and/or to receive from the first device while selectively refraining from transmitting to the first device concurrent with receiving over the wide area wireless network and/or selectively refraining from receiving from the first device concurrent with transmitting over the wide area wireless network. Increasing data capacity of at least one other frame of the multi-frame piconet pattern at least partially compensate for the first frame that is not usable to transmit to the first device and/or to receive from the first device.

In still other embodiments, it may be determined at the second device that a first frame of the multi-frame piconet pattern is not usable to transmit to the first device and/or to receive from the first device while selectively refraining from transmitting to the first device concurrent with receiving over a wide area wireless network and/or selectively refraining from receiving from the first device concurrent with transmitting over the wide area wireless network. In some embodiments, if a first frame of the multi-frame piconet pattern is determined not to be usable, transmitting to the first device and/or receiving from the first device is performed at a higher bit density in a second frame of the multi-frame piconet pattern than in a third frame of the multi-frame piconet pattern. In other embodiments, transmitting to the first device and/or receiving from the first device is performed in adjacent slot positions that straddle adjacent frames in the multi-frame piconet pattern, in response to the determining. In still other embodiments, a bit density of transmitting and/or receiving in the multi-frame piconet pattern may be increased, in response to the determining. Accordingly, these embodiments may be used to at least partially compensate for the fact that a given frame of the multi-frame piconet pattern may not be usable due to wide area network coexistence. In some embodiments, the multi-frame piconet pattern is of a duration that is an integer multiple of a frame duration of the wide area wireless network. Moreover, in other embodiments, the short-range wireless piconet is a Bluetooth wireless piconet, and the wide area wireless network is a WLAN, WiMAX, LTE and/or HSPA wide area wireless network.

Other systems, methods, and/or computer program products according to other embodiments will be or become apparent to one with skill in the art upon review of the following drawings and detailed description. It is intended that all such additional systems, methods, and/or computer program products be included within this description, be within the scope of the present invention, and be protected by the accompanying claims.

### BRIEF DESCRIPTION OF THE DRAWINGS

Figure 1 is a block diagram of a short-range wireless piconet and methods of operating same, according to various embodiments.
Figure 2 is a flowchart of operations that may be performed by a dual-radio device, such as a dual-radio device of Figure 1, according to various embodiments.
Figure 3 is a flowchart of operations that may performed by a single radio device, such as a single radio device of Figure 1, according to various embodiments.
Figure 4 graphically illustrates timing diagrams of WiMAX and Bluetooth, and is a reproduction of Figure 7-8 of Bluetooth D05r02.
Figure 5 is a block diagram illustrating signaling between a Bluetooth radio and a collocated WLAN and/or WiMAX radio, and is a reproduction of Figure 7-5 of Bluetooth D05r02.
Figure 6 graphically illustrates Bluetooth master performance in a collocation situation according to various embodiments.
Figure 7 graphically illustrates Bluetooth transactions at WiMAX TX-RX transition in frame m=4h+3, according to various embodiments.
Figure 8 graphically illustrates timing diagrams of HSPA UL and Bluetooth, according to various embodiments.

### DETAILED DESCRIPTION

The present invention now will be described more fully hereinafter with reference to the accompanying figures, in which embodiments are shown. This invention may, however, be embodied in many alternate forms and should not be construed as limited to the embodiments set forth herein.

Accordingly, while the invention is susceptible to various modifications and alternative forms, specific embodiments thereof are shown by way of example in the drawings and will herein be described in detail. It should be understood, however, that there is no intent to limit the invention to the particular forms disclosed, but on the contrary, the invention is to cover all modifications, equivalents, and alternatives falling within the scope of the invention as defined by the claims. Like numbers refer to like elements throughout the description of the figures.

The terminology used herein is for the purpose of describing particular embodiments only and is not intended to be limiting of the invention. As used herein, the singular forms "a", "an" and "the" are intended to include the plural forms as well, unless the context clearly indicates otherwise. It will be further understood that the terms "comprises", "comprising," "includes" and/or "including" (and variants thereof) when used in this specification, specify the presence of stated features, integers, steps, operations, elements, and/or components, but do not preclude the presence or addition of one or more other features, integers, steps, operations, elements, components, and/or groups thereof. Moreover, when an element is referred to as being "responsive" to another element/step (and variants thereof), it can be directly responsive to the other element/step, or intervening elements/steps may be present. In contrast, when an element/step is referred to as being "directly responsive" to another element/step (and variants thereof), there are no intervening elements/steps present. As used herein the term "and/or" includes any and all combinations of one or more of the associated listed items and may be abbreviated as "/".

It will be understood that, although the terms first, second, third, etc. may be used herein to describe various elements, these elements should not be limited by these terms. These terms are only used to distinguish one element from another. Thus, for example, a first frame may be regarded as a second frame and vice versa, or a first device may be regarded as a second device and vice versa.

The present invention is described below with reference to block diagrams and/or flowchart illustrations of methods; apparatus (systems and/or devices) and/or computer program products according to embodiments of the invention. It is understood that a block of the block diagrams and/or flowchart illustrations, and combinations of blocks in the block diagrams and/or flowchart illustrations, can be implemented by computer program instructions. These computer program instructions may be provided to a processor of a general purpose computer, special purpose computer, digital signal processor and/or other programmable data processing apparatus to produce a machine, such that the instructions, which execute via the processor of the computer and/or other programmable data processing apparatus, create means (functionality) and/or structure for implementing the functions/acts specified in the block diagrams and/or flowchart block or blocks.

These computer program instructions may also be stored in a computer-readable memory that can direct a processor of the computer and/or other programmable data processing apparatus to function in a particular manner, such that the instructions stored in the computer-readable memory produce an article of manufacture including instructions which implement the function/act as specified in the block diagrams and/or flowchart block or blocks.

The computer program instructions may also be loaded onto a computer and/or other programmable data processing apparatus to cause a series of operational steps to be performed on the computer and/or other programmable apparatus to produce a computer-implemented process such that the instructions which execute on the computer or other programmable apparatus provide steps for implementing the functions/acts specified in the block diagrams and/or flowchart block or blocks.

Accordingly, the present invention may be embodied in hardware and/or in software (including firmware, resident software, micro-code, etc.) that runs on a processor such as a digital signal processor, collectively referred to as "circuitry" or "a circuit". Furthermore, the present invention may take the form of a computer program product on a computer-usable or computer-readable storage medium having computer-usable or computer-readable program code embodied in the medium for use by or in connection with an instruction execution system. In the context of this document, a computer-usable or computer-readable medium may be any medium that can contain, store, communicate or transport the program for use by or in connection with the instruction execution system, apparatus, or device.

The computer-usable or computer-readable medium may be, for example but not limited to, an electronic, magnetic, optical, electromagnetic or semiconductor system, apparatus or device. More specific examples (a non-exhaustive list) of the computer-readable medium would include the following: a portable computer diskette, a random access memory (RAM), a read-only memory (ROM), an erasable programmable read-only memory (EPROM or Flash memory), and a portable optical and/or magnetic media, such as a flash disk or CD-ROM.

It should also be noted that in some alternate implementations, the functions/acts noted in the blocks may occur out of the order noted in the flowcharts. For example, two blocks shown in succession may in fact be executed substantially concurrently or the blocks may sometimes be executed in the reverse order, depending upon the functionality/acts involved. Moreover, the functionality of a given block of the flowcharts and/or block diagrams may be separated into multiple blocks and/or the functionality of two or more blocks of the flowcharts and/or block diagrams may be at least partially integrated. Finally, other blocks may be added/inserted between the blocks that are illustrated.

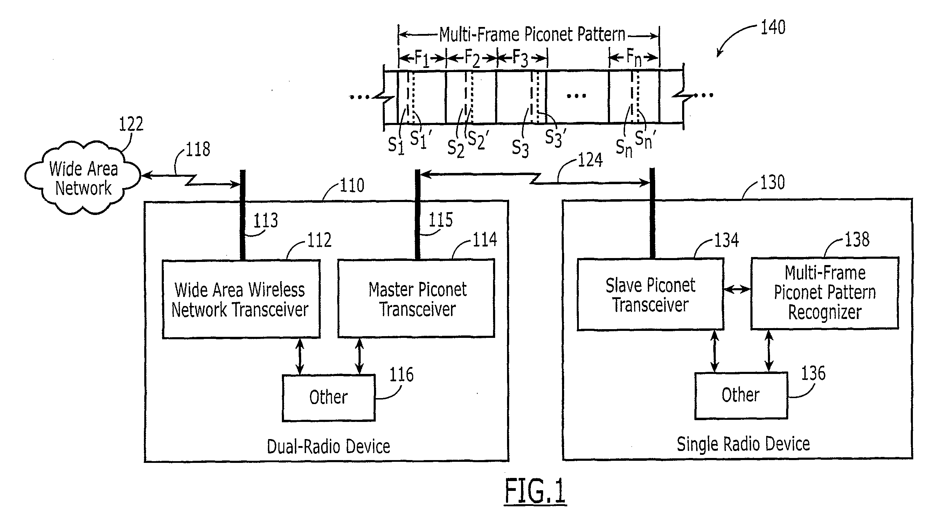

Figure 1 is a block diagram of a wireless piconet and methods of operating same according to various embodiments. As shown in Figure 1, the wireless piconet includes a dual-radio device **110** and a single radio device **130.** The dual-radio device **110** includes a wide area wireless network transceiver **112,** and a master piconet transceiver **114** that are collocated in the dual-radio device **110.** The wide area wireless network transceiver **112** includes a wide area wireless network transmitter, a wide area wireless network receiver and a wide area wireless network antenna **113** that communicate with a wide area network **122** over a wireless link **118.** The master piconet transceiver **114** includes a master piconet transmitter, a master piconet receiver and a master piconet antenna **115.** It will be understood that various components may be shared between the wide area wireless network transceiver **112** and the master piconet transceiver **114** including the antennas **113** and **115** in some embodiments. In other embodiments, however, components are not shared as between the wide area wireless network transceiver **112** and the master piconet transceiver **114.** In still other embodiments, the slave piconet transceiver **134** is collocated in the dual-radio device **110** and the master piconet transceiver **114** is located in the single radio device **130,** as described in detail below.

Still referring to Figure 1, other components/circuits **116** are also included in the dual-radio device **110.** These other components/circuits may include a processor, controller, memory, user interface, and/or other components/circuits that provide the functionality of the dual-radio device **110,** for example as a mobile telephone, audio player, computer, PDA, vehicle navigation system, etc. The design of a dual-radio device as described in this paragraph is known to those having skill in the art and need not be described further herein.

According to various embodiments, the dual-radio device **110** is configured to selectively refrain from transmitting to the single radio device **130** over the master piconet transceiver **114** using short-range, ad-hoc wireless piconet link **124,** concurrent with receiving from a wide area wireless network **122** over the wide area wireless network transceiver **112** and link **118,** and/or to selectively refrain from receiving from the single radio device **130** over the master piconet transceiver **114** and link **124** concurrent with transmitting to the wide area wireless network **122** over the wide area wireless network transceiver **112** and link **118.** In particular, Bluetooth D05r02 proposed applying time multiplexing so that only one transceiver (wide area or piconet) can operate at any given time. However, various embodiments of the invention may arise from a recognition that this may be too strict a requirement, because the collocated transceivers **112/114** may transmit simultaneously, or may receive simultaneously, when they use two different frequency bands. The only potentially prohibited situation according to various embodiments is when one transceiver transmits and the other transceiver simultaneously receives. Accordingly, piconet and wide area network coexistence may be provided in the dual-radio device **110,** by prohibiting concurrent transmission by one transceiver and reception by the other transceiver.

In order to avoid simultaneous transmission and reception by the two transceivers **112/114,** sometimes one of the transceivers must defer its transmission or reception. A retransmission can take care of the eventual delivery. Usually, it is the piconet that defers operation, as the wide area wireless network transceiver may have little control over the on-the-air protocol and/or traffic allocation.

Still referring to Figure 1, the single radio device **130** includes a slave piconet transceiver **134,** a multi-frame piconet pattern recognizer **138** and other components **136.** The other components may include a processor, memory, a user interface, such as a microphone and ear speaker and/or other components/circuits that provide the functionality of the single radio device **130,** for example as a Bluetooth headset. The multi-frame piconet pattern recognizer **138** can be incorporated into one or more of the other components **136** or may be at least partially distinct therefrom.

The multi-frame piconet pattern recognizer **138** is configured to determine a multi-frame piconet pattern **140** in the wireless piconet link **124,** comprising at least two different piconet slot positions S₁-Sₙ in at least two different piconet frames F₁-Fn that are used by the master piconet transceiver **114** to transmit to the slave piconet transceiver **134** and/or at least two different piconet slot positions S₁'-Sₙ' that are used by the master piconet transceiver **114** to receive from the slave piconet transceiver **134** in at least two different piconet frames F₁-Fₙ. The single radio device **130** also includes a slave piconet transceiver **134** that is configured to selectively transmit to the dual-radio device **110** during the at least two piconet slot positions S₁'-Sₙ' in the at least two different piconet frames F₁-Fₙ that were determined by the pattern recognizer **138** to be used by the dual-radio device **110** to receive from the single radio device **130,** and/or to selectively receive from the dual-radio device **110** during the at least two piconet slot positions S₁-Sₙ in the at least two different piconet frames F₁-Fₙ that were determined by the pattern recognizer **138** to be used by the dual-radio device **110** to transmit to the single radio device **130.**

Thus, the slave piconet transceiver **134** selectively transmits to the dual-radio device **110** over link **124** during those piconet slot positions that were determined to be used by the dual-radio device **110** to receive from the single radio device **130,** and/or the slave piconet transceiver **134** selectively receives from the master transceiver **114** over link **124** during those piconet slot positions that were determined to be used by the master piconet transceiver **114** to transmit to the slave piconet transceiver **134.** Accordingly, the multi-frame piconet pattern recognizer **138** self-learns the multi-frame piconet pattern **140** that is used by the master piconet transceiver **114** to selectively refrain from simultaneous transmission by one of the wide area network transceiver **112** or the master piconet transceiver **114** and reception by the other of the master piconet transceiver **114** and the wide area wireless network transceiver **112.**

In some embodiments, the slave piconet transmitter may be placed in a lower-power or powered-off sleep mode, except during those piconet slot positions frames S₁'-Sₙ' that were determined to be used by the dual-radio device **110** to receive from the single radio device **130,** and/or the slave piconet receiver may be placed in a sleep mode, except during those piconet slot positions S₁-Sₙ that were determined to be used by the dual-radio device **110** to transmit to the single radio device **130.** Power can thereby be conserved by adapting the sleep mode of the slave piconet transceiver **134** based on the multi-frame piconet pattern 140 that is learned by the multi-frame piconet pattern recognizer **138.** This power saving may be particularly beneficial in a piconet slave unit, such as a Bluetooth earpiece, where battery power may be quite precious.

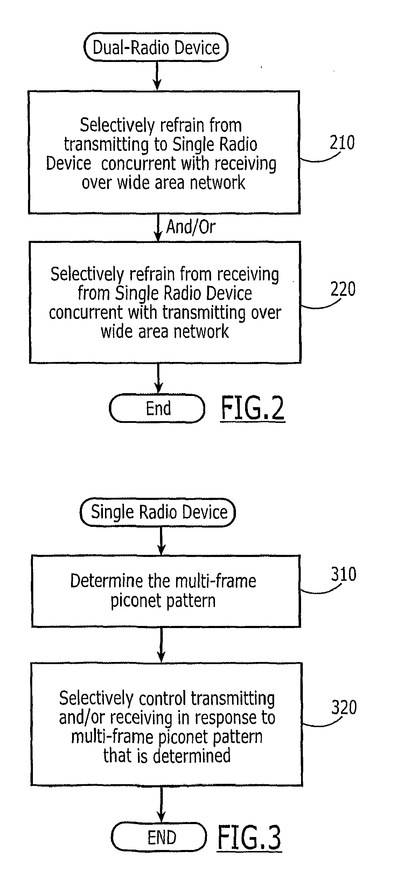

Figure 2 is a flowchart of operations that may be performed by a dual-radio device, such as a dual-radio device **110** of Figure 1, according to various embodiments of the present invention. These operations may be performed by the wide area network transceiver **112,** the master piconet transceiver **114** and the other components **116** including a controller, according to various embodiments.

Referring to Figure 2 at Block **210,** the dual-radio device, e.g., the master piconet transceiver **114,** selectively refrains from transmitting to the single radio device **130,** e.g., the slave piconet transceiver **134** over link **124,** concurrent with receiving over a wide area wireless network **122,** for example using the wide area wireless network transceiver **112** and link **118.** Also, at Block **220,** the dual-radio device **110** selectively refrains from receiving from the single radio device **130,** e.g., from the slave unit piconet transceiver **134** over link **124,** concurrent with transmitting, e.g., by the wide area wireless network transceiver **112,** over the wide area wireless network **122** and link **118.** The operations of Blocks **210** and **220,** therefore, create a multi-frame piconet pattern in link **124,** for example the multi-frame piconet pattern **140** of Figure 1, wherein at least two different piconet slot positions are used by the dual-radio device **110** to transmit to the single radio device **130** in at least two different piconet frames, and/or at least two different piconet slot positions are used by the dual-radio device **110** to receive from the single radio device **130** in at least two different piconet frames. It will be understood that either or both operations of Blocks **210** and **220** may be performed in various embodiments, so that "and/or" is indicated between Blocks **210** and **220.**

Additional embodiments of Blocks **210/220** will now be described. In particular, in some embodiments, the dual-radio device **110** may also determine that a first frame of the multi-frame piconet pattern **140,** such as frame F₁, is not usable to transmit to the single radio device **130** or to receive from the single radio device **130** at all, in order to selectively refrain from transmitting to the single radio device **130** concurrent with receiving over a wide area wireless network **122** and/or to selectively refrain from receiving from the single radio device **130** concurrent with transmitting over the wide area wireless network **122.** In other words, a given frame may not be usable at all while reducing/avoiding interference with a collocated wide area network transceiver **112.** In these embodiments, actions may be taken by the dual-radio device **110** to increase the data capacity of at least one of the remaining frames in the multi-frame piconet pattern **140,** so as to reduce or avoid the loss of capacity by virtue of the fact that the first frame is not usable to transmit and/or to receive.

In particular, in some embodiments, data capacity may be increased by transmitting to the single radio device 130 and receiving from the single radio device **130** at a higher bit density in a second frame, such as frame F₂ of a multi-frame piconet pattern **140,** than in a third frame, such as frame F₃ of the multi-frame piconet pattern. Accordingly, bit density may be increased in at least one frame. In other embodiments, the dual-radio device **110** may transmit to the single radio device **130** and receive from the single radio device **130** in adjacent slot positions that straddle adjacent frames in the multi-frame piconet pattern. For example, transmitting and receiving may straddle a last slot of last frame Fₙ and a first slot of frame F₁ of the succeeding pattern **140.** Finally, in still other embodiments, a bit density of transmitting and receiving in the multi-frame piconet pattern may be increased. Thus, these embodiments can at least partially compensate for the fact that a given frame of the multi-frame piconet pattern **140** may be unusable due to wide area network transceiver coexistence.

Figure 3 is a flowchart of operations that may be performed by a single radio device, such as a single radio device **130** of Figure 1, according to various embodiments. In particular, at Block **310,** the single radio device determines a multi-frame piconet pattern, such as the multi-frame piconet pattern **140** of Figure 1, that comprises at least two different piconet slot positions S₁...Sₙ that are used by the dual-radio device **110** to transmit to the single radio device **130** in at least two different piconet frames F₁-Fₙ and/or at least two different piconet slot positions S₁'-Sₙ' that are used by the dual-radio device **110** to receive from the single radio device **130** in at least two different piconet frames F₁-Fₙ. Operations at Block **310** may be performed by the multi-frame piconet pattern recognizer **138** of Figure 1. Then, as shown at Block **320,** transmitting and/or receiving by the single radio device **130** is selectively controlled in response to the multi-frame piconet pattern **140** that was determined by the single radio device **130,** so that the single radio device **130** selectively transmits to the dual-radio device **110** during those piconet slot positions S₁'-Sₙ' that were determined to be used by the dual-radio device **110** to receive from the single radio device **130,** and/or the single radio device **130** selectively receives from the dual-radio device **110** during those piconet slot positions S₁-Sₙ that were determined to be used by the dual-radio device **110** to transmit to the single radio device **130.** As was noted above, operations of Block **320** may be used to selectively place the slave transmitter in a sleep mode and/or to selectively place the slave receiver in a sleep mode.

Additional discussion of various embodiments will now be provided. In particular, as was described above, multiple radio systems (e.g., transceivers **112** and **114**) may be collocated in a single device (e.g., device **110**) like a phone or a laptop. Both transceivers (also referred to as "radios") may carry traffic with Quality of Service (QoS) requirements. As an example, a cellular connection may carry a Voice over IP (VoIP) link, and may simultaneously carry a short-range connection to a wireless headset. Examples are found with WLAN/Bluetooth, WiMAX/Bluetooth, LTE/Bluetooth, and HSPA/Bluetooth. WiMAX/Bluetooth will now be used as an illustrative example.

Since the radios (e.g., **112** and **114)** are located in very close proximity, they may interfere with each other, even if they do not use the exact same frequency bands. The isolation between the antennas (e.g., **113** and **115)** is generally too low to guarantee undisturbed reception in one radio when the other radio is transmitting.

The collocation problem may be solved as noted in Bluetooth D05r02 by applying time multiplexing: only one radio can operate at one moment in time. However, various embodiments of the invention may rise from recognition that this generally is too strict a requirement, because when the radios make use of different frequency bands, they may transmit simultaneously, or receive simultaneously without excessive interference.

To avoid simultaneous transmitting (TX) and receiving (RX), sometimes one of the radios must defer its transmission or reception. A retransmission can take care of the eventual delivery. Usually, it is the Bluetooth device that defers operation, as the WiMAX client has little influence on the air protocol and/or the traffic allocations. Thus, according to various embodiments, when the collocated Bluetooth radio is a master (as it often is), it can allocate the proper time slots in order to avoid collisions with the WiMAX operations. Some embodiments arise from the additional recognition that this procedure may result in excessive power consumption in the single radio (e.g., Bluetooth slave) device. In particular, if the master transmissions do not arrive at the proper time, the slave device may need to extend the active window to listen for additional, deferred, transmissions.

The Bluetooth voice protocol is based on a 3.75ms interval (frame). Cellular voice protocols are based on 5, 10, or 20ms intervals (frames). The relative timing between the cellular and Bluetooth radios determines at which time instances the Bluetooth radio needs to defer its operation to avoid collisions. This time may change per frame. However, there is a distinct multi-frame pattern because of the repetitive nature in both the cellular link and the Bluetooth link. Therefore, although the Bluetooth slave has no prior knowledge when the deferral takes place, it can learn the repetitive multi-frame pattern and adapt its activity to this pattern. This can reduce or prevent excessive listening and wasteful transmissions by the slave and thus preserve power in the slave device.

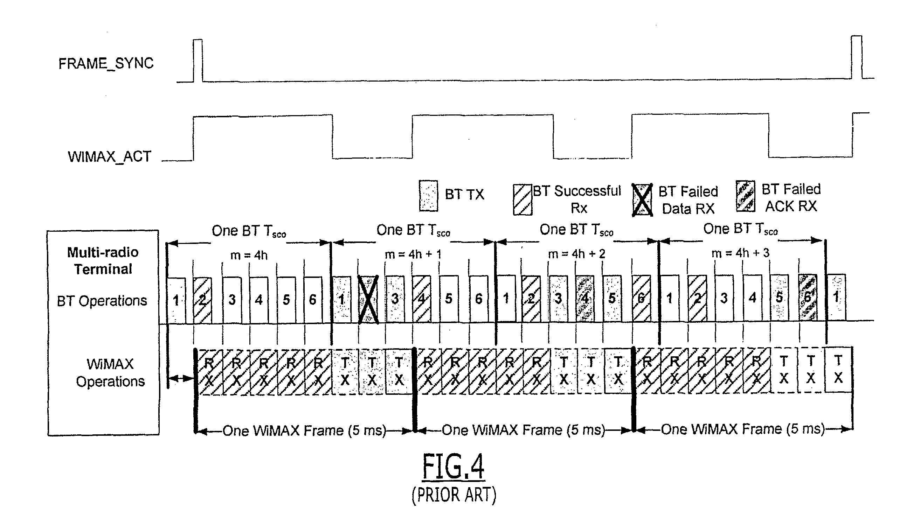

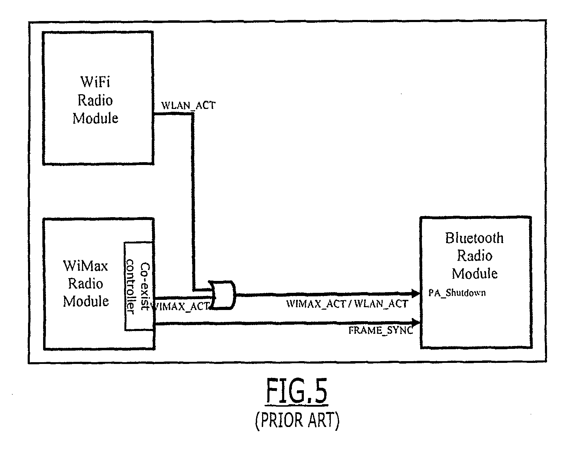

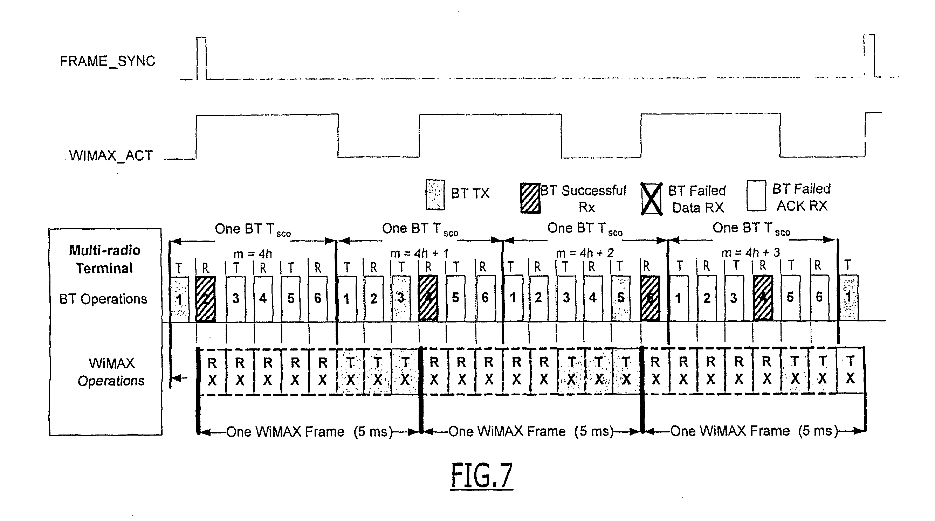

The basic problem may be explained with an example. In Figure 4, which is a reproduction of Figure 7-8 of Bluetooth D05r02, assume a dual-radio device (also referred to as a "Multi-radio Terminal"), such as a dual-radio device **110,** contains a WiMAX radio, such as a wide-area transceiver **112,** and Bluetooth radio, such as a piconet transceiver **114.** The WiMAX is a TDD version with a downlink-to-uplink (DL:UL) ratio (arbitrarily chosen) of 5:3. The Bluetooth applies an Extended Synchronous Connection Oriented (eSCO) voice connection using Ev3 packets and with 2 possible retransmissions. Frame sync and WiMAX_ACT are signals from the WiMAX radio to the Bluetooth radio as proposed by Bluetooth D05r02 Figure 7-5, and reproduced in Figure 5. In particular, the signal WiMAX_ACT indicates when the WiMAX radio is receiving. In that mode (WiMAX_ACT is high), the Bluetooth radio is not permitted to transmit. This is illustrated in Figure 4. Furthermore, any signals received by the Bluetooth receiver while the WiMAX radio is transmitting (WiMAX_ACT is low) may be lost.

Figure 4 also shows that it is possible to sustain a voice link with Bluetooth even if collisions with the WiMAX radio occur. In the example of Figure 4, the Bluetooth master may carry out a rather inefficient process. For example, in frame m=4h+1, it sends on slot 1 although it (maybe) knows that no acknowledgement can be received. So it could better skip slot 1 and transmit in slot 3 only. Similarly in frame m=4h+2, it does not need to receive in slot 2 since nothing was transmitted in slot 1. Furthermore, transmission in slot 3 is not necessary as no ACK can be received in slot 4. In frame m=4h+3, there does not exist any transmit opportunity. So there is no need to receive either.

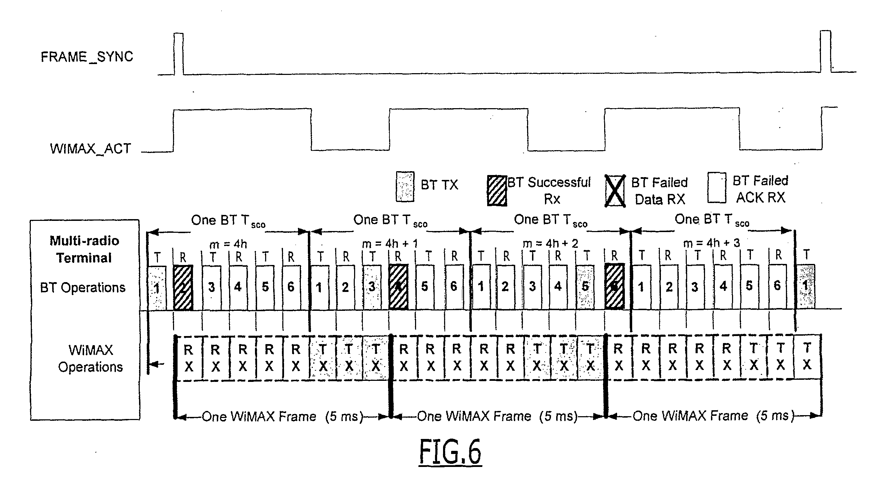

A more efficient scheduling for the multi-radio device, according to various embodiments, is shown in Figure 6. To apply this scheduling, the multi-radio device either receives the WiMAX_ACT duration from the WiMAX module (the timing it can derive from the WiMAC_ACT signal directly), or it can on the fly "learn" the duration by examining the WiMAX_ACT signal. The "deferral" pattern of the multi-radio device is 0, 2, 4, ∞, 0, 2, 4, ∞, 0, ... in the series of frames, relative to the first slot of the frame.

Consider now what can happen at the single radio device 130. In a conventional case, the single radio device expects a voice packet in the first slot of the frame. It then returns a voice packet with an ACK. If no voice packet is received, it will anyway send a voice packet but also a NAK since no previous voice packet was received. In addition, it keeps listening for a voice packet from the dual-radio device 110. This means, that in the example of Figure 4, the single radio device can sleep for most of the time in frame m=4h (2 out of 6 slots are active), but in all remaining frames, it needs to be awake much more (4 out of 6 slots in frame m=4h+1, and all 6 slots in frames m=4h+2 and m=4h+3.

A more efficient, power-savings scheme for the single radio device may result when it "learns" the (successful) transmissions from the dual-radio device as shown in Figure 6, according to various embodiments. In that case, for frame m=4h+1, it is only active during slots 3 and 4. For frame m=4h+2, this will be slots 5 and 6. This can reduce the power consumption in the single radio device considerably. The deferral pattern applied by the dual-radio device is repetitive (4 frames in this case since 4×3.75ms = 3×5ms). In other words, in some embodiments, the multi-frame piconet pattern is an integer multiple of frame duration of the wide area wireless network. Thus, the single radio device can quickly learn the pattern applied by the dual-radio device and adapts its own scheduling.

An issue may remain with frame m=4h+3. As shown, a there is no Bluetooth voice exchange possible. However, as shown in Figure 6, the successful Bluetooth exchange happens at the WiMAX TX-RX transition (i.e., adjacent slot positions that straddle adjacent frames in the multi-frame piconet pattern). In the case of frame m=4h+3, those transitions lie outside the Bluetooth frame. There are a number of ways to solve this problem, according to various embodiments. In some embodiments, the voice packet that should be sent in frame m=4h+3, is sent in frame m=4h+4 (or another frame) instead, together with the voice packet that should be sent in m=4h+4. This may use a different packet type that can contain more bits in the payload (like an extended voice (EV) EV4 or 2-EV3 packet), but only for frame m=4h+4. The other frames may keep the EV3 packet type. Thus, a higher bit density may be used in one or more other frames. Alternatively, a packet exchange is done on the WiMAX RX-TX transition for frame m=4h+3. This is illustrated in Figure 7. Note that in this case, the reception in the dual-radio device precedes the transmission in the dual-radio device. Thus, adjacent slot positions that straddle adjacent frames in the multi-frame piconet pattern are used. Finally, in still other embodiments, a different Bluetooth interval with corresponding packet type may be chosen. For example, a packet type 2-EV3 is used, which can contain twice as many bits as EV3. The eSCO interval may, thus, be increased from 3.75ms to 7.5ms. In that case, the Bluetooth transactions will take place in frame m=4h, slots 1 and 2, and in frame m=4h+2, slots 5 and 6. Thus, bit density may be increased. In still other embodiments, the single radio device **130** may simply sleep during the entire m=4h+3 frame.

Note that the Multi-frame pattern recognizer **138** can learn the successful transmission and reception based on the (re-)transmission behavior, the response behavior, and/or the error patterns while the single-radio device **130** communicates with the dual-radio device **110.**

In the description above, it was assumed that the piconet transceiver **114** which is collocated with a wide area wireless transceiver **112** in dual-radio device **110,** is a master device in the short-range communication link **124.** In that case, the wide area transceiver **112** will control the master piconet transceiver **114** to align transmissions and receptions of both radios. The slave piconet transceiver **134** will learn this adapted pattern as described above. However, it is also possible that the piconet transceiver **114** in dual-radio device **110** is a slave device and the piconet transceiver **134** in single radio device **130** is a master. In that case, the wide area wireless transceiver **112** will control the collocated slave piconet transceiver to prevent collisions. But based on the error behavior and successful responses from the collocated slave piconet transceiver, the master piconet transceiver in the single radio device can learn the enforced multi-frame pattern as well. That is, after learning the pattern, it will only transmit when the wide area transceiver **112** is not transmitting, and only receive when the wide area transceiver **112** is not receiving. Again, large power savings can be achieved when the single radio device can be asleep at times it cannot communicate with the dual-radio device. In view of the above, the two short-range wireless piconet devices that communicate with one another may be generally referred to as first and second devices, with the master and slave locations being interchangeable.

Systems different from WiMAX may use other frame lengths. A typical frame length for VoIP is 20ms. Depending on the eSCO interval, this results in a different repetitive deferral pattern applied by the dual-radio device **110,** which can be learned by the single radio device **130.** Since the deferral process is based on scheduling of the dual-radio device **110,** no changes in the Bluetooth specification are needed.

Furthermore, various embodiments are not restricted to Bluetooth. Different radios that support QoS links with intervals that are not integer multiples of each other, will show a repetitive "collision" behavior which can be solved by repetitive deferral patterns applied by the collocated radios. These patterns can be learned by the units that communicate with these collocated radios to reduce or minimize the duty cycle.

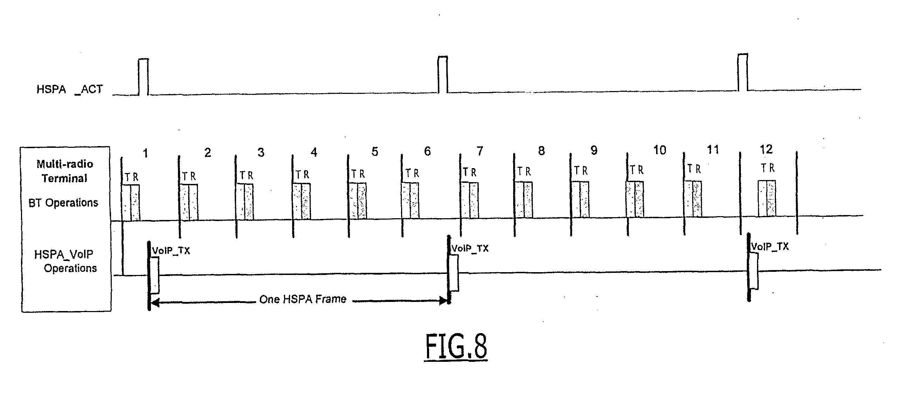

Another example is UMTS (or LTE) in the extension band at 2.5 GHz. The ITU has selected the band 2500-2570 MHz for FDD uplink. If VoIP is applied on an HSPA link, the Bluetooth radio will be blocked from reception for a few ms every 20ms (i.e., the VoIP interval). The HSPA FDD downlink will be at the band 2620-2690 MHz. With proper filtering, the Bluetooth transmissions can be suppressed in the UMTS receiver. So there may be no restrictions on the Bluetooth TX. A possible timing diagram for Bluetooth/HSPA_VoIP collocation is shown in Figure 8 (note the different time scale). The Bluetooth deferral pattern is repetitive with an interval of 16 frames or 60ms (16×3.75ms = 3×20ms). For this particular case (initial offset between Bluetooth and HSPA, the deferral is only in frame 12. The slave can quickly "learn" that in frame m=16h+12, it is active in slots 3 and 4 rather than slots 1 and 2.

Accordingly, some embodiments have recognized that WiMAX, LTE and/or HSPA (at 2.5 GHz) and Bluetooth (at 2.4 GHz) that are collocated in the same device, may interfere due to the close proximity of the radio antennas. An extra challenge may occur when both radios carry QoS traffic, for example, when a terminal relays VoIP to a wireless headset. According to some embodiments, the Bluetooth master can adapt its timing to avoid collisions in time, and the Bluetooth slave can self-learn the repetitive behavior of the timing and will adapt to potentially save power.

Many different embodiments have been disclosed herein, in connection with the above description and the drawings. It will be understood that it would be unduly repetitious and obfuscating to literally describe and illustrate every combination and subcombination of these embodiments. Accordingly, the present specification, including the drawings, shall be construed to constitute a complete written description of all combinations and subcombinations of the embodiments described herein, and of the manner and process of making and using them, and shall support claims to any such combination or subcombination.

In the drawings and specification, there have been disclosed embodiments of the invention and, although specific terms are employed, they are used in a generic and descriptive sense only and not for purposes of limitation, the scope of the invention being set forth in the following claims.

## Claims

1. A method of operating a first device that communicates with a second device in a short-range wireless piconet comprising:
determining at the first device a multi-frame piconet pattern (140) comprising at least two different piconet slot positions that are used by the second device to transmit to the first device in at least two different piconet frames and/or at least two different piconet slot positions that are used by the second device to receive from the first device in at least two different piconet frames;
selectively controlling transmitting and/or receiving by the first device in response to the multi-frame piconet pattern (140) that was determined by the first device so that the first device selectively transmits to the second device during the at least two different piconet slot positions in the at least two different piconet frames that were determined to be used by the second device to receive from the first device and/or the first device selectively receives from the second device during the at least two different piconet slot positions in the at least two different piconet frames that were determined to be used by the second device to transmit to the first device;
further determining at the second device that a first frame of the multi-frame piconet pattern (140) is not usable to transmit to the first device and/or to receive from the first device while selectively refraining from transmitting to the first device concurrent with receiving over a wide area wireless network and/or selectively refraining from receiving from the first device concurrent with transmitting over the wide area wireless network, **characterized by**
at least partially compensating for the first frame that is not usable to transmit to the first device and/or to receive from the first device by increasing data capacity of at least one other frame of the multi-frame piconet pattern (140).

2. The method according to claim 1, wherein determining at the first device is preceded by the following that is performed at the second device:
selectively refraining from transmitting to the first device concurrent with receiving over the wide area wireless network; and/or
selectively refraining from receiving from the first device concurrent with transmitting over the wide area wireless network.

3. The method according to claim 1 or 2, wherein the first device includes a first device transmitter and a first device receiver and wherein selectively controlling transmitting and/or receiving comprises placing the first device transmitter in a sleep mode except during the at least two different piconet slot positions in the at least two different piconet frames that were determined to be used by the second device to receive from the first device and/or placing the first device receiver in a sleep mode except during the at least two different piconet slot positions in the at least two different piconet frames that were determined to be used by the second device to transmit to the first device.

4. The method according to any one of claims 1-3, wherein increasing the data capacity comprises transmitting to the first device and/or receiving from the first device at a higher bit density in a second frame of the multi-frame piconet pattern (140) than in a third frame of the multi-frame piconet pattern (140), in response to the further determining.

5. The method according to any one of claims 1-3, wherein increasing the data capacity comprises transmitting to the first device and/or receiving from the first device in adjacent slot positions that straddle adjacent frames in the multi-frame piconet pattern (140), in response to the further determining.

6. The method according to any one of claims 1-3, wherein increasing the data capacity comprises increasing a bit density of transmitting and/or receiving in the multi-frame piconet pattern (140), in response to the further determining.

7. The method according to any one of claims 1-6, wherein the multi-frame piconet pattern (140) is of a duration that is an integer multiple of a frame duration of the wide area wireless network.

8. A system comprising: a first device that communicates with a second device in a short-range wireless piconet, comprising:
a multi-frame piconet pattern (140) recognizer at the first device that is configured to determine a multi-frame piconet pattern (140) comprising at least two different piconet slot positions that are used by the second device to transmit to the first device in at least two different piconet frames and/or at least two different piconet slot positions that are used by the second device to receive from the first device in at least two different piconet frames; and
a first device transceiver at the first device that is configured to selectively transmit to the second device during the at least two different piconet slot positions in the at least two different piconet frames that were determined by the pattern recognizer (138) to be used by the second device to receive from the first device and/or to selectively receive from the second device during the at least two different piconet slot positions in the at least two different piconet frames that were determined by the pattern recognizer (138) to be used by the second device to transmit to the first device,
further comprising the multi-frame piconet pattern (140) recognizer at the second device that is configured to determine that a first frame of the multi-frame piconet pattern (140) is not usable to transmit to the first device and/or to receive from the first device while selectively refraining from transmitting to the first device concurrent with receiving over the wide area wireless network and/or selectively refraining from receiving from the first device concurrent with transmitting over the wide area wireless network, **characterized in that**
the second device is further configured to at least partially compensate for the first frame that is not usable to transmit to the first device and/or to receive from the first device by increasing data capacity of at least one other frame of the multi-frame piconet pattern (140).

9. The system according to claim 8, wherein the first device transceiver includes a first device transmitter and a first device receiver and wherein the first device transceiver is further configured to place the first device transmitter in a sleep mode except during the at least two different piconet slot positions in the at least two different piconet frames that were determined by the pattern recognizer (138) to be used by the second device to receive from the first device and/or to place the first device receiver in a sleep mode except during the at least two different piconet slot positions in the at least two different piconet frames that were determined by the pattern recognizer (138) to be used by the second device to transmit to the first device.

10. The system according to claim 8 or 9, wherein the multi-frame piconet pattern (140) is of a duration that is an integer multiple of a frame duration of a wide area wireless network transceiver (112) that is collocated in the second device.

11. A method of operating a second device that communicates with a first device in a short-range wireless piconet comprising:
selectively refraining from transmitting to the first device concurrent with receiving over a wide area wireless network; and/or
selectively refraining from receiving from the first device concurrent with transmitting over the wide area wireless network to thereby produce a multi-frame piconet pattern (140) comprising at least two different piconet slot positions that are used by the second device to transmit to the first device in at least two different piconet frames and/or at least two different piconet slot positions that are used by the second device to receive from the first device in at least two different piconet frames,
further determining at the second device that a first frame of the multi-frame piconet pattern (140) is not usable to transmit to the first device and/or to receive from the first device while selectively refraining from transmitting to the first device concurrent with receiving over the wide area wireless network and/or selectively refraining from receiving from the first device concurrent with transmitting over the wide area wireless network, **characterized by**
at least partially compensating for the first frame that is not usable to transmit to the first device and/or to receive from the first device by increasing data capacity of at least one other frame of the multi-frame piconet pattern (140).

12. The method according to claim 11, wherein increasing the data capacity comprises transmitting to the first device and/or receiving from the first device at a higher bit density in a second frame of the multi-frame piconet pattern (140) than in a third frame of the multi-frame piconet pattern (140), in response to the further determining.

13. The method according to claim 11, wherein increasing the data capacity comprises transmitting to the first device and/or receiving from the first device in adjacent slot positions that straddle adjacent frames in the multi-frame piconet pattern (140), in response to the further determining.

14. The method according to claim 11, wherein increasing the data capacity comprises increasing a bit density of transmitting and/or receiving in the multi-frame piconet pattern (140), in response to the further determining.

15. The method according to any one of claim 11-14, wherein the multi-frame piconet pattern (140) is of a duration that is an integer multiple of a frame duration of the wide area wireless network.

## Patentansprüche

1. Verfahren zum Betreiben einer ersten Vorrichtung, die mit einer zweiten Vorrichtung in einem drahtlosen Nahbereichs-Piconetz kommuniziert, umfassend:
Bestimmen, an der ersten Vorrichtung, eines Mehrfachrahmen-Piconetzmusters (140), umfassend mindestens zwei unterschiedliche Piconetz-Schlitzpositionen, die durch die zweite Vorrichtung verwendet werden, um an die erste Vorrichtung in mindestens zwei unterschiedlichen Piconetz-Rahmen zu senden, und/oder mindestens zwei unterschiedliche Piconetz-Schlitzpositionen, die durch die zweite Vorrichtung verwendet werden, um von der ersten Vorrichtung in mindestens zwei unterschiedlichen Piconetz-Rahmen zu empfangen;
selektives Steuern des Sendens und/oder Empfangens durch die erste Vorrichtung als Antwort auf das Mehrfachrahmen-Piconetzmuster (140), das von der ersten Vorrichtung bestimmt wurde, so dass die erste Vorrichtung an die zweite Vorrichtung während der mindestens zwei unterschiedlichen Piconetz-Schlitzpositionen in den mindestens zwei unterschiedlichen Piconetz-Rahmen selektiv sendet, die bestimmt wurden, um durch die zweite Vorrichtung verwendet zu werden, um von der ersten Vorrichtung zu empfangen, und/oder so dass, die erste Vorrichtung von der zweiten Vorrichtung während der mindestens zwei unterschiedlichen Piconetz-Schlitzpositionen in den mindestens zwei unterschiedlichen Piconetz-Rahmen selektiv empfängt, die bestimmt wurden, um durch die zweite Vorrichtung verwendet zu werden, um an die erste Vorrichtung zu senden;
des Weiteren das Bestimmen, an der zweiten Vorrichtung, dass ein erster Rahmen des Mehrfachrahmen-Piconetzmusters (140) nicht verwendet werden kann, um an die erste Vorrichtung zu senden und/oder um von der ersten Vorrichtung zu empfangen, während selektiv davon abgesehen wird, gleichzeitig mit dem Empfangen über ein drahtloses Weitverkehrsnetz, an die erste Vorrichtung zu senden, und/oder selektiv davon abgesehen wird, gleichzeitig mit dem Senden über das drahtlose Weitverkehrsnetz, von der ersten Vorrichtung zu empfangen, **gekennzeichnet durch**
mindestens teilweises Kompensieren für den ersten Rahmen, der nicht verwendet werden kann, um an die erste Vorrichtung zu senden und/oder um von der ersten Vorrichtung zu empfangen, **durch** Erhöhen der Datenkapazität von mindestens einem weiteren Rahmen des Mehrfachrahmen-Piconetzmusters (140).

2. Verfahren nach Anspruch 1, wobei dem Bestimmen an der ersten Vorrichtung Folgendes vorausgeht, das an der zweiten Vorrichtung durchgeführt wird:
selektiv davon Absehen, gleichzeitig mit dem Empfangen über das drahtlose Weitverkehrsnetz, an die erste Vorrichtung zu senden; und/oder
selektiv davon Absehen, gleichzeitig mit dem Senden über das drahtlose Weitverkehrsnetz von der ersten Vorrichtung zu empfangen.

3. Verfahren nach Anspruch 1 oder 2, wobei die erste Vorrichtung ein Sendegerät der ersten Vorrichtung und ein Empfangsgerät der ersten Vorrichtung aufweist, und wobei das selektive Steuern des Sendens und/oder Empfangens umfasst, das Sendegerät der ersten Vorrichtung in einen Schlafmodus zu bringen, außer während der mindestens zwei unterschiedlichen Piconetz-Schlitzpositionen in den mindestens zwei unterschiedlichen Piconetz-Rahmen, die bestimmt wurden, um durch die zweite Vorrichtung verwendet zu werden, um von der ersten Vorrichtung zu empfangen, und/oder das Empfangsgerät der ersten Vorrichtung in einen Schlafmodus zu bringen, außer während der mindestens zwei unterschiedlichen Piconetz-Schlitzpositionen in den mindestens zwei unterschiedlichen Piconetz-Rahmen, die bestimmt wurden, um durch die zweite Vorrichtung verwendet zu werden, um an die erste Vorrichtung zu senden.

4. Verfahren nach irgendeinem der Ansprüche 1 bis 3, wobei das Erhöhen der Datenkapazität das Senden an die erste Vorrichtung und/oder das Empfangen von der ersten Vorrichtung mit einer höheren Bit-Dichte in einem zweiten Rahmen des Mehrfachrahmen-Piconetzmusters (140) als in einem dritten Rahmen des Mehrfachrahmen-Piconetzmusters (140) als Antwort auf das weitere Bestimmen umfasst.

5. Verfahren nach irgendeinem der Ansprüche 1 bis 3, wobei das Erhöhen der Datenkapazität das Senden an die erste Vorrichtung und/oder das Empfangen von der ersten Vorrichtung in nebeneinander liegenden Schlitzpositionen umfasst, die nebeneinander liegende Rahmen in dem Mehrfachrahmen-Piconetzmuster (140) überspannen, als Antwort auf das weitere Bestimmen.

6. Verfahren nach irgendeinem der Ansprüche 1 bis 3, wobei das Erhöhen der Datenkapazität das Erhöhen einer Bit-Dichte zum Senden und/oder Empfangen in dem Mehrfachrahmen-Piconetzmuster (140) umfasst, als Antwort auf das weitere Bestimmen.

7. Verfahren nach irgendeinem der Ansprüche 1 bis 6, wobei das Mehrfachrahmen-Piconetzmuster (140) eine Dauer hat, die ein ganzzahliges Vielfaches einer Rahmendauer des drahtlosen Weitverkehrsnetzes ist.

8. System, umfassend:
eine erste Vorrichtung, die mit einer zweiten Vorrichtung in einem drahtlosen Nahbereichs-Piconetz kommuniziert, umfassend:
ein Erkennungsgerät eines Mehrfachrahmen-Piconetzmusters (140) an der ersten Vorrichtung, das dazu ausgestaltet ist, ein Mehrfachrahmen-Piconetzmuster (140) zu bestimmen, umfassend mindestens zwei unterschiedliche Piconetz-Schlitzpositionen, die durch die zweite Vorrichtung verwendet werden, um an die erste Vorrichtung in mindestens zwei unterschiedlichen Piconetz-Rahmen zu senden, und/oder mindestens zwei unterschiedliche Piconetz-Schlitzpositionen, die durch die zweite Vorrichtung verwendet werden, um von der ersten Vorrichtung in mindestens zwei unterschiedlichen Piconetz-Rahmen zu empfangen; und
ein Sende-/Empfangsgerät der ersten Vorrichtung an der ersten Vorrichtung, das dazu ausgestaltet ist, an die zweite Vorrichtung während der mindestens zwei unterschiedlichen Piconetz-Schlitzpositionen in den mindestens zwei unterschiedlichen Piconetz-Rahmen selektiv zu senden, die durch das Muster-Erkennungsgerät (138) bestimmt wurden, um durch die zweite Vorrichtung verwendet zu werden, um von der ersten Vorrichtung zu empfangen und/oder von der zweiten Vorrichtung während der mindestens zwei unterschiedlichen Piconetz-Schlitzpositionen in den mindestens zwei unterschiedlichen Piconetz-Rahmen selektiv zu empfangen, die durch das Muster-Erkennungsgerät (138) bestimmt wurden, um durch die zweite Vorrichtung verwendet zu werden, um an die erste Vorrichtung zu senden,
des Weiteren umfassend, das Erkennungsgerät des Mehrfachrahmen-Piconetzmusters (140) an der zweiten Vorrichtung, das dazu ausgestaltet ist, zu bestimmen, dass ein erster Rahmen des Mehrfachrahmen-Piconetzmusters (140) nicht zum Senden an die erste Vorrichtung und/oder zum Empfangen von der ersten Vorrichtung verwendet werden kann, während selektiv davon abgesehen wird, gleichzeitig mit dem Empfangen über das drahtlose Weitverkehrsnetz an die erste Vorrichtung zu senden, und/oder selektiv davon abgesehen wird, gleichzeitig mit dem Senden über das drahtlose Weitverkehrsnetz von der ersten Vorrichtung zu empfangen,
**dadurch gekennzeichnet, dass**
die zweite Vorrichtung des Weiteren dazu ausgestaltet ist, mindestens teilweises für den ersten Rahmen zu kompensieren, der nicht verwendet werden kann, um an die erste Vorrichtung zu senden und/oder um von der ersten Vorrichtung zu empfangen, durch Erhöhen der Datenkapazität von mindestens einem weiteren Rahmen des Mehrfachrahmen-Piconetzmusters (140).

9. System nach Anspruch 8, wobei das Sende-/Empfangsgerät der ersten Vorrichtung ein Sendegerät der ersten Vorrichtung und einen Empfangsgerät der ersten Vorrichtung aufweist und wobei das Sende-/Empfangsgerät der ersten Vorrichtung des Weiteren dazu ausgestaltet ist, das Sendegerät der ersten Vorrichtung in einen Schlafmodus zu bringen, außer während der mindestens zwei unterschiedlichen Piconetz-Schlitzpositionen in den mindestens zwei unterschiedlichen Piconetz-Rahmen, die durch das Muster-Erkennungsgerät (138) bestimmt wurden, um durch die zweite Vorrichtung verwendet zu werden, um von der ersten Vorrichtung zu empfangen, und/oder das Empfangsgerät der ersten Vorrichtung in einen Schlafmodus zu bringen, außer während der mindestens zwei unterschiedlichen Piconetz-Schlitzpositionen in den mindestens zwei unterschiedlichen Piconetz-Rahmen, die durch das Muster-Erkennungsgerät (138) bestimmt wurden, um durch die zweite Vorrichtung verwendet zu werden, um an die erste Vorrichtung zu senden.

10. System nach irgendeinem der Ansprüche 8 oder 9, wobei das Mehrfachrahmen-Piconetzmuster (140) eine Dauer hat, die ein ganzzahliges Vielfaches einer Rahmendauer eines Sende-/Empfangsgerätes (112) eines drahtlosen Weitverkehrsnetzes ist, das mit in der zweiten Vorrichtung untergebracht ist.

11. Verfahren zum Betreiben einer zweiten Vorrichtung, die mit einer ersten Vorrichtung in einem drahtlosen Nahbereichs-Piconetz kommuniziert, umfassend:
selektiv davon Absehen, gleichzeitig mit dem Empfangen über ein drahtloses Weitverkehrsnetz an die erste Vorrichtung zu senden; und/oder
selektiv davon Absehen, gleichzeitig mit dem Senden über das drahtlose Weitverkehrsnetz, von der ersten Vorrichtung zu empfangen, um dadurch ein Mehrfachrahmen-Piconetzmuster (140) zu produzieren, umfassend mindestens zwei unterschiedliche Piconetz-Schlitzpositionen, die durch die zweite Vorrichtung verwendet werden, um an die erste Vorrichtung in mindestens zwei unterschiedlichen Piconetz-Rahmen zu senden, und/oder mindestens zwei unterschiedliche Piconetz-Schlitzpositionen, die durch die zweite Vorrichtung verwendet werden, um von der ersten Vorrichtung in mindestens zwei unterschiedlichen Piconetz-Rahmen zu empfangen;
des Weiteren das Bestimmen an der zweiten Vorrichtung, dass ein erster Rahmen des Mehrfachrahmen-Piconetzmusters (140) nicht verwendet werden kann, um an die erste Vorrichtung zu senden und/oder um von der ersten Vorrichtung zu empfangen, während selektiv davon abgesehen wird, gleichzeitig mit dem Empfangen über das drahtlose Weitverkehrsnetz, an die erste Vorrichtung zu senden, und/oder selektiv davon abgesehen wird, gleichzeitig mit dem Senden über das drahtlose Weitverkehrsnetz, von der ersten Vorrichtung zu empfangen,
**gekennzeichnet durch**
mindestens teilweises Kompensieren für den ersten Rahmen, der nicht verwendet werden kann, um an die erste Vorrichtung zu senden und/oder um von der ersten Vorrichtung zu empfangen, **durch** Erhöhen der Datenkapazität von mindestens einem weiteren Rahmen des Mehrfachrahmen-Piconetzmusters (140).

12. Verfahren nach Anspruch 11, wobei das Erhöhen der Datenkapazität das Senden an die erste Vorrichtung und/oder das Empfangen von der ersten Vorrichtung mit einer höheren Bit-Dichte in einem zweiten Rahmen des Mehrfachrahmen-Piconetzmusters (140) als in einem dritten Rahmen des Mehrfachrahmen-Piconetzmusters (140) als Antwort auf das weitere Bestimmen umfasst.

13. Verfahren nach Anspruch 11, wobei das Erhöhen der Datenkapazität das Senden an die erste Vorrichtung und/oder das Empfangen von der ersten Vorrichtung in nebeneinander liegenden Schlitzpositionen, die nebeneinander liegende Rahmen in dem Mehrfachrahmen-Piconetzmuster (140) überspannen, als Antwort auf das weitere Bestimmen umfasst.

14. Verfahren nach Anspruch 11, wobei das Erhöhen der Datenkapazität das Erhöhen einer Bit-Dichte zum Senden und/oder Empfangen in dem Mehrfachrahmen-Piconetzmuster (140) als Antwort auf das weitere Bestimmen umfasst.

15. Verfahren nach irgendeinem der Ansprüche 11 bis 14, wobei das Mehrfachrahmen-Piconetzmuster (140) eine Dauer hat, die ein ganzzahliges Vielfaches einer Rahmendauer des drahtlosen Weitverkehrsnetzes ist.

## Revendications

1. Procédé de fonctionnement d'un premier dispositif communiquant avec un deuxième dispositif dans un picoréseau sans fil de faible portée, consistant à :
déterminer au niveau du premier dispositif une configuration de picoréseau multi-trames (140) comprenant au moins deux positions de créneau de picoréseau différentes utilisées par le deuxième dispositif pour émettre vers le premier dispositif dans au moins deux trames de picoréseau différentes et/ou au moins deux positions de créneau de picoréseau différentes utilisées par le deuxième dispositif pour recevoir en provenance du premier dispositif dans au moins deux trames de picoréseau différentes ;
commander sélectivement l'émission et/ou la réception par le premier dispositif en réponse à la configuration de picoréseau multi-trames (140) ayant été déterminée par le premier dispositif de façon que le premier dispositif émette sélectivement vers le deuxième dispositif pendant lesdites au moins deux positions de créneau de picoréseau différentes dans les au moins deux trames de picoréseau différentes dont il a été déterminé qu'elles étaient utilisées par le deuxième dispositif pour recevoir en provenance du premier dispositif et/ou que le premier dispositif reçoive sélectivement en provenance du deuxième dispositif pendant lesdites au moins deux positions de créneaux de picoréseau différentes dans les au moins deux trames de picoréseau différentes dont il a été déterminé qu'elles étaient utilisées par le deuxième dispositif pour émettre vers le premier dispositif ;
déterminer en outre au niveau du deuxième dispositif qu'une première trame de la configuration de picoréseau multi-trames (140) n'est pas utilisable pour émettre vers le premier dispositif et/ou pour recevoir en provenance du premier dispositif tout en évitant sélectivement d'émettre vers le premier dispositif en même temps que la réception dans un réseau sans fil à grande distance et/ou tout en évitant sélectivement de recevoir en provenance du premier dispositif en même temps que l'émission dans le réseau sans fil à grande distance, **caractérisé par** le fait de :
compenser au moins partiellement la première trame qui n'est pas utilisable pour émettre vers le premier dispositif et/ou pour recevoir en provenance du premier dispositif en augmentant la capacité de données d'au moins une autre trame de la configuration de picoréseau multi-trames (140).

2. Procédé selon la revendication 1, dans lequel la détermination effectuée au niveau du premier dispositif est précédée par les étapes suivantes effectuées au niveau du deuxième dispositif :
éviter sélectivement d'émettre vers le premier dispositif en même temps que la réception par l'intermédiaire du réseau sans fil à grande distance ; et/ou éviter sélectivement de recevoir en provenance du premier dispositif en même temps que l'émission par l'intermédiaire du réseau sans fil à grande distance.

3. Procédé selon la revendication 1 ou 2, dans lequel le premier dispositif comporte un premier émetteur de dispositif et un premier récepteur de dispositif et dans lequel la commande sélective de l'émission et/ou de la réception consiste à faire passer le premier émetteur de dispositif dans un mode de veille sauf pendant lesdites au moins deux positions de créneau de picoréseau différentes dans lesdites au moins deux trames de picoréseau différentes dont il a été déterminé qu'elles étaient utilisées par le deuxième dispositif pour recevoir en provenance du premier dispositif et/ou faire passer le premier récepteur de dispositif dans un mode de veille sauf pendant lesdites au moins deux positions de créneau de picoréseau différentes dans lesdites au moins deux trames de picoréseau différentes dont il a été déterminé qu'elles étaient utilisées par le deuxième dispositif pour émettre vers le premier dispositif.

4. Procédé selon l'une quelconque des revendications 1-3, dans lequel l'augmentation de la capacité de données consiste à émettre vers le premier dispositif et/ou à recevoir en provenance du premier dispositif avec une densité binaire plus élevée dans une deuxième trame de la configuration de picoréseau multi-trames (140) que dans une troisième trame de la configuration de picoréseau multi-trames (140), en réponse à la détermination supplémentaire.

5. Procédé selon l'une quelconque des revendications 1-3, dans lequel l'augmentation de la capacité de données consiste à émettre vers le premier dispositif et/ou à recevoir en provenance du premier dispositif à des positions de créneau adjacentes qui chevauchent des trames adjacentes dans la configuration de picoréseau multi-trames (140), en réponse à la détermination supplémentaire.

6. Procédé selon l'une quelconque des revendications 1-3, dans lequel l'augmentation de la capacité de données consiste à augmenter une densité binaire de l'émission et/ou de la réception dans la configuration de picoréseau multi-trames (140), en réponse à la détermination supplémentaire.

7. Procédé selon l'une quelconque des revendications 1-6, dans lequel la configuration de picoréseau multi-trames (140) a une durée qui est un multiple entier d'une durée de trame du réseau sans fil à grande distance.

8. Système comprenant : un premier dispositif communiquant avec un deuxième dispositif dans un picoréseau sans fil de faible portée, comprenant :
un dispositif de reconnaissance de configuration de picoréseau multi-trames (140) sur le premier dispositif qui est configuré pour déterminer une configuration de picoréseau multi-trames (140) comprenant au moins deux positions de créneau de picoréseau différentes utilisées par le deuxième dispositif pour émettre vers le premier dispositif dans au moins deux trames de picoréseau différentes et/ou au moins deux positions de créneau de picoréseau différentes utilisées par le deuxième dispositif pour recevoir en provenance du premier dispositif dans au moins deux trames de picoréseau différentes ; et
un premier émetteur-récepteur de dispositif au niveau du premier dispositif, qui est configuré pour émettre sélectivement vers le deuxième dispositif pendant lesdites au moins deux positions de créneau de picoréseau différentes dans lesdites au moins deux trames de picoréseau différentes dont il a été déterminé par le dispositif de reconnaissance de motifs (138) qu'elles étaient utilisées par le deuxième dispositif pour recevoir en provenance du premier dispositif et/ou pour recevoir sélectivement en provenance du deuxième dispositif pendant lesdites au moins deux positions de créneau de picoréseau différentes dans lesdites au moins deux trames de picoréseau différentes dont il a été déterminé par le dispositif de reconnaissance de motifs (138) qu'elles étaient utilisées par le deuxième dispositif pour émettre vers le premier dispositif,
comprenant en outre le dispositif de reconnaissance de configurations de picoréseau multi-trames (140) au niveau du deuxième dispositif, qui est configuré pour déterminer qu'une première trame de la configuration de picoréseau multi-trames (140) n'est pas utilisable pour émettre vers le premier dispositif et/ou pour recevoir en provenance du premier dispositif tout en évitant sélectivement d'émettre vers le premier dispositif en même temps que la réception par l'intermédiaire du réseau sans fil à grande distance et/ou tout en évitant sélectivement de recevoir en provenance du premier dispositif en même temps que l'émission par l'intermédiaire du réseau sans fil à grande distance, **caractérisé en ce que** :
le deuxième dispositif est en outre configuré pour compenser au moins partiellement la première trame qui n'est pas utilisable pour émettre vers le premier dispositif et/ou pour recevoir en provenance du premier dispositif en augmentant la capacité de données d'au moins une autre trame de la configuration de picoréseau multi-trames (140).

9. Système selon la revendication 8, dans lequel le premier émetteur-récepteur de dispositif comporte un premier émetteur de dispositif et un premier récepteur de dispositif et dans lequel le premier émetteur-récepteur de dispositif est en outre configuré pour faire passer le premier émetteur de dispositif dans un mode de veille sauf pendant lesdites au moins deux positions de créneau de picoréseau différentes dans lesdites au moins deux trames de picoréseau différentes dont il a été déterminé par le dispositif de reconnaissance de configurations (138) qu'elles étaient utilisées par le deuxième dispositif pour recevoir en provenance du premier dispositif et/ou pour faire passer le premier récepteur de dispositif dans un mode de veille sauf pendant lesdites au moins deux positions de créneau de picoréseau différentes dans lesdites au moins deux trames de picoréseau différentes dont il a été déterminé par le dispositif qu'elles étaient utilisées par le deuxième dispositif pour émettre vers le premier dispositif.

10. Système selon la revendication 8 ou 9, dans lequel la configuration de picoréseau multi-trames (140) a une durée qui est un multiple entier d'une durée de trame d'un émetteur-récepteur de réseau sans fil à grande distance (112) qui est co-localisé dans le deuxième dispositif.

11. Procédé de fonctionnement d'un deuxième dispositif communiquant avec un premier dispositif dans un picoréseau sans fil de faible portée, consistant à :
éviter sélectivement d'émettre vers le premier dispositif en même temps que la réception par l'intermédiaire d'un réseau sans fil à grande distance ; et/ou
éviter sélectivement de recevoir en provenance du premier dispositif en même temps que l'émission par l'intermédiaire du réseau sans fil à grande distance pour ainsi produire une configuration de picoréseau multi-trames (140) comprenant au moins deux positions de créneau de picoréseau différentes utilisées par le deuxième dispositif pour émettre vers le premier dispositif dans au moins deux trames de picoréseau différentes et/ou à au moins deux positions de créneaux de picoréseau différentes utilisées par le deuxième dispositif pour recevoir en provenance du premier dispositif dans au moins deux trames de picoréseau différentes,
déterminer en outre au niveau du second dispositif qu'une première trame de la configuration de picoréseau (140) n'est pas utilisable pour émettre vers le premier dispositif et/ou pour recevoir en provenance du premier dispositif tout en évitant sélectivement d'émettre vers le premier dispositif en même temps que la réception par l'intermédiaire du réseau sans fil à grande distance et/ou tout en évitant sélectivement de recevoir en provenance du premier dispositif en même temps que l'émission par l'intermédiaire du réseau sans fil à grande distance, **caractérisé par** le fait de
compenser au moins partiellement la première trame qui n'est pas utilisable pour émettre vers le premier dispositif et/ou pour recevoir en provenance du premier dispositif en augmentant la capacité de données d'au moins une autre trame de la configuration de picoréseau multi-trames (140).

12. Procédé selon la revendication 11, dans lequel l'augmentation de la capacité de données consiste à émettre vers le premier dispositif et/ou à recevoir en provenance du premier dispositif avec une densité binaire plus élevée dans une deuxième trame de la configuration de picoréseau multi-trames (140) que dans une troisième trame de la configuration de picoréseau multi-trames (140), en réponse à la détermination supplémentaire.

13. Procédé selon la revendication 11, dans lequel l'augmentation de la capacité de données consiste à émettre vers le premier dispositif et/ou à recevoir en provenance du premier dispositif à des positions de créneau adjacentes qui chevauchent des trames adjacentes dans la configuration de picoréseau multi-trames (140), en réponse à la détermination supplémentaire.

14. Procédé selon la revendication 11, dans lequel l'augmentation de la capacité de données consiste à augmenter une densité binaire d'émission et/ou de réception dans la configuration de picoréseau multi-trames (140), en réponse à la détermination supplémentaire.

15. Procédé selon l'une quelconque des revendications 11-14, dans lequel la configuration de picoréseau multi-trames (140) a une durée qui est un multiple entier d'une durée de trame du réseau sans fil à grande distance.
